# EUROPEAN PATENT SPECIFICATION

(11) **EP 2 005 670 B1**
(45) Date of publication and mention of the grant of the patent: **29.06.2011**
(21) Application number: 07736098.0
(22) Date of filing: 30.03.2007
(51) Int. Cl.: H04L 12/56

(54) **CONTROL OF REAL TIME SERVICES**
STEUERUNG VON ECHTZEITDIENSTEN
COMMANDE DE SERVICES EN TEMPS RÉEL

(30) Priority: 07.04.2006 US 789898 P
(43) Date of publication of application: 24.12.2008
(73) Proprietor: Markport Limited, Dublin 2 (IE)
(72) Inventor: GREENING, Mark, Bristol BS7 8SZ (GB); JONES, Nicholas, Bristol BS3 1PR (GB); SMITH, Simon, Wiltshire SN15 3AQ (GB); SPANN, David, Bristol BS32 8BD (GB); WOODMAN, Ralph, Monmouthshire NP16 6DQ (GB)
(74) Representative: Weldon, Michael James
(86) International application number: PCT/IE2007/000042
(87) International publication number: WO 2007/116385

(56) References cited:
- WO-A-00/23898
- US-A1- 2002 152 305
- US-A1- 2005 021 713

## Description

### INTRODUCTION

### Field of the Invention

The invention relates to real time control of simultaneous service instances (or "sessions"), particularly communication sessions but also others such as for example power usage. In this specification the term "session" means not only provision of a service over a period of time such a voice call or a data or video download, but also single-shot service instances such as sending an SMS or any other service instance which involves requirement for charging resources from an account.

### Prior Art Discussion

Present prepay intelligent network (IN) systems for prepaid/postpaid credit-limited control, such as JAIN or a Parlay application, control the behaviour of the communication service with respect to the end (prepay) subscriber, for example:
- to play a welcome announcement the first time the subscriber makes a call on the network,
- to play a pre-call announcement of the subscriber's balance, or
- to send an SMS at the end of the call to announce the cost of the call.

They also perform a rating and simple charging process which calculates how much available air-time subscribers may speak for, and how much money they have spent on each call, and maintain an account for the subscriber. This process is performed before, during and after a voice call (for example) is made. Such a process is also disclosed in document US-A1-2005/021713.

The following outlines some of the scenarios which arise in current communication systems.

Charge/Refund model. In some systems services bought by the user (SMS, MMS etc) are charged for against a prepaid account. If the service is then not delivered a refund occurs on the account to return funds to the user for the failed service. For example, with SMS services a failure to deliver an SMS within a 7 day period can result in the failed delivery being refunded.

Reserve/Capture model. In this model a client computer requests a reservation of an amount of credit or time or other chargeable unit. Once the service has been delivered the client computer then captures the amount that has been used, which can include a recalculation of the rate based on the measured usage. If a failure should occur with the service then the reservation is released.

Scalar services, also known as stream services. These services are real-time sessions of activity where the end of the session is not normally known. For example a voice telephone call is a scalar service and it is not known at any point of time during the call when the user will hang up and hence the final length of the call. Therefore attempts have to be made during the call to ensure that the call can not continue for more time than the user has funds to pay for the call.

Event services. These services are single one-shot events like SMS or MMS where all of the information needed to rate and charge a user for the service is known and can be granted from the single event.

These terms are used throughout this document.

Most current systems only allow static reservations of credit where a fixed amount is used for each reservation request. For scalar services such as voice calling this causes a significant network performance overhead. This is due to clients requiring multiple requests of smaller reservations to give a better usage of the credit for multiple services. These multiple requests often result in more network server CPU requirements. They can also result in longer response times if the hardware is not scaled to cope with the demand.

Another problem at present is denial of service due to insufficient credit even though credit is available. Some charging systems allocate all available credit to a single service such as a voice call, preventing the delivery of competing/concurrent services.

US6,741,686 describes an approach which allows negative balances (an "undercut") to allow concurrent services to occur, leading to inaccurate accounting. Service denial is then performed after the service has already been allowed to occur past the credit limit by barring the service in the network.

US2004/0017905 describes a system to enable concurrent monitoring of communication sessions. However, the monitoring is complex due to the requirement for the user devices to make requests and communicate with billing systems. For example, the system needs to request of a first network access device how much credit it expects to use, and the system uses this information to calculate available credit for a second network access device. If there is not enough credit the second device is refused access. The system also needs to exchange updates between the devices.

US6,115,613 describes a system and method for handling a call by a member of a group, the call being parked and subsequently connected or disconnected.

In general, present systems are inadequate for dealing with concurrent sessions, such as use of phones that allow background downloading whilst voice calls can be active, particularly in the context of group accounts where multiple users can all access a single prepaid account.

### Glossary

| | |
|---|---|
| CDR | Call Detail Record |
| CORBA | Common Object Request Broker Architecture |
| CPU | Central Processing Unit |
| EDR | Event Detail Record |
| FIFO | First In, First Out |
| GGSN | Gateway GPRS Support Node |
| GSN | GPRS Support Nodes |
| HTTP | Hypertext Transfer Protocol |
| IC | Intelligent Charger |
| IMS | IP Multimedia Subsystem |
| IN | Intelligent Network |
| IP | Internet Protocol |
| JAIN | Java APIs for Intelligent Networks |
| MMS | Multimedia Messaging Service |
| MP3 | MPEG-1 Audio Layer 3 |
| MSC | Mobile service Switching Center |
| OA&M | Operations, Administration, & Maintenance |
| PDP Context | GPRS data structure containing information regarding a subscriber's active (GPRS) session. |
| PSA | The LogicaCMG Pre-delivery Service Agent |
| PSTN | Public Switched Telephone Network |
| SCP | Service Control Point |
| SDP | Service Data Point |
| SGSN | Serving GPRS Support Node |
| SMS | Short Message Service |
| SNMP | Simple Network Management Protocol |
| SOAP | Simple Object Access Protocol |
| SSP | Service Switching Point |
| TCP/IP | Transmission Control Protocol/Internet Protocol |
| TV | Television |
| xGSN | Either the SGSN or the GGSN |

### SUMMARY OF THE INVENTION

According to the invention, there is provided a real time service supply monitoring and control system as set out in claim 1.

In one embodiment, the service supply entities are communication network entities and the service usage is in communication sessions.

In one embodiment, the data manager maintains accounts for scalar and event-based resources.

In a further embodiment, the session manager maintains a running estimate of total resources for concurrent sessions, and allocates resources to each session to minimise number of requests for fresh resources.

In one embodiment, the session manager generates a resource requirement estimate upon commencement of a fresh session.

In one embodiment, the session manager comprises means for using historical data to calculate an initial resource allocation for a session.

In one embodiment, the historical data is per subscriber and the session manager calculates the initial resource allocation upon detection of subscriber identity.

In one embodiment, the historical data is per service and the session manager calculates the initial resource allocation according to the service.

In one embodiment, at least one pot is associated by the session manager with a plurality of service types.

In one embodiment, the session manager associates a resource account with a group of subscribers.

In one embodiment, the session manager re-allocates all concurrent sessions according to a policy which determines a target end time for the sessions.

In a further embodiment, the session manager re-allocates all concurrent sessions according to a policy which determines target data volumes for sessions.

In one embodiment, the re-allocation is performed on the basis that all, concurrent sessions end at approximately the same time.

In one embodiment, the session manager comprises means for interfacing with service supply entities according to a reserve-capture scheme.

In one embodiment, the session manager comprises means for flagging resources which are amenable to modification for re-allocation.

In a further embodiment, the session manager does not flag some software downloads as being amenable to modification as they are atomic in nature.

In one embodiment, the session manager comprises means for interfacing with service entities in parallel.

In one embodiment, the session manager comprises a session controller object linked with a resource re-allocation policy object having at least one re-allocation algorithm, method, and the session controller object has methods for calling the re-allocation policy object for making decisions for resource re-allocation.

In one embodiment, the session controller object contains a plurality of session objects, each containing at least one reservation token object, and the session controller object dynamically performs resource re-allocation by instructing a session object to modify a contained reservation token object

In one embodiment, the session object modifies the reservation token object by modifying an attribute of the reservations token object,

In one embodiment, the session manager comprises an interface for modification of attributes of the session controller and policy objects to implement configuration settings.

In another aspect, the invention provides a computer readable medium comprising software code for performing operations as set out in claim 17.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a combined block and flow diagram showing architecture and operation of a real time service monitoring and control system (henceforth "control system") of the invention;
Fig. 2 is a diagram showing interfacing of the control system with service supply entities;
Fig. 3 is a diagram illustrating architecture of a session manager of the control system;
Fig. 4 is a flow diagram illustrating steps which arise when a request to charge is processed;
Fig. 5 is a diagram showing how the control system interacts with a client; and
Fig. 6 shows how the control system performs concurrent service charging with a re-reservation request.

### Description of the Embodiments

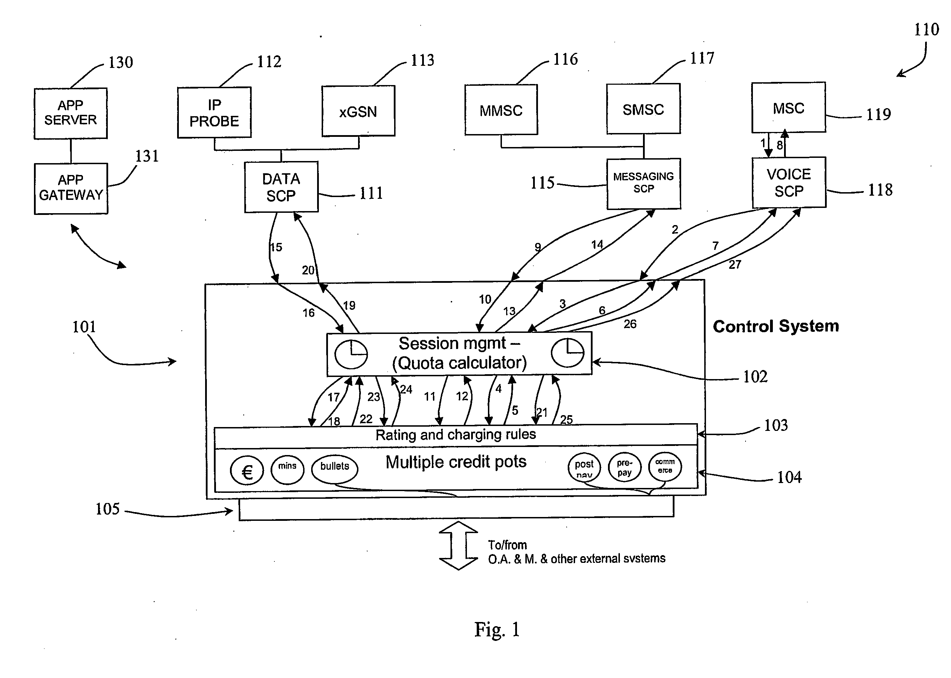

Referring to Fig. 1 a control system 101 of the invention operates in a mobile network. It is sometimes referred to in the specification as an "Intelligent Charger". The system 101 comprises a session manager 102 which interfaces with multiple service entities 110, including in this embodiment:
a data SCP 111, in turn linked with an IP probe 112 and an xGSN 113,
a messaging SCP 115, in turn linked with an MMSC 116 and an SMSC 117, and
a voice SCP 118, linked with an MSC 119.

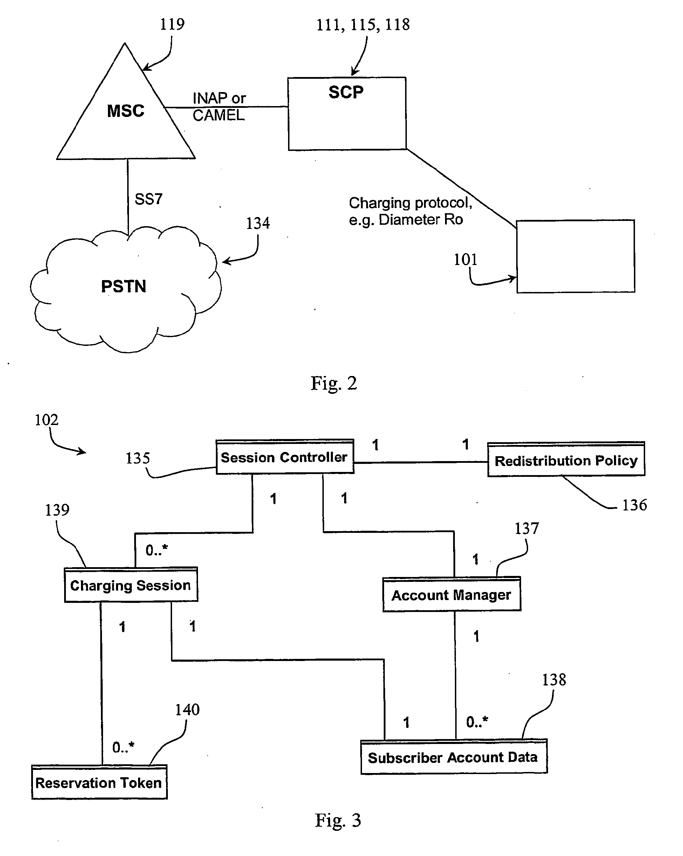

As shown in Fig. 2, the interfacing with the SCPs is over the Diameter Ro protocol. The SCPs in turn interface with network entities such as the MSC 119 over INAP (or CAMEL in another embodiment for example), which in turn interfaces with a PSTN 134 over SS7. The session manager 102 uses its protocols to communicate with the service entities 111 - 119 according to the reserve/capture model. The Parlay Charging protocol may alternatively be used. The service entities 111-119 operate as clients of the session manager 102. Each client makes a resource reservation using the session manager (102), and the session manager adjusts reservations and notifies the clients accordingly.

The control system 101 also communicates with a variety of network elements including in this embodiment an application ("APP") server 130 and an application gateway ("APP Gateway") 131. The control system 101 performs "intelligent charging" with maintenance of multiple pots and bi-directional communication with various network elements as described in more detail below.

In general, the interfacing between the session manager 102 and the various service entities is on the basis of the service entities being clients of the session manager.

The session manager 102 comprises session management functions which communicate with a rating and charging rule base 103 for a persistent data manager 104 managing multiple resource accounts and pots. Interfaces 105 communicate with external systems for activities such as operations, administration, and maintenance..

The session manager 102 monitors sessions in real time, with decisions being made within a time duration of less than 0.5 sec, and typically less than 50ms. It monitors the sessions and interfaces with the rules 103, which decide how to re-allocate resources maintained by accounts of the data manager 104.

The data manager 104 manages multiple accounts, some of which are used to provide resources for different types of session. Some accounts have multiple pots, each of which is associated with a type of resource. This is described in more detail below.

Referring to Fig. 3, the session manager 102 is a software component comprising objects that control the charging sessions on behalf of the connected charging client(s), such as a legacy voice SCP. The object structure comprises a session controller class 135 linked with a redistribution policy class 136. Child classes of the session controller class 135 include a charging session class 139, in turn containing a reservation token class 140. An account manager class 137 is a parent class to a subscriber account data class 138. Objects instantiated from the classes 139 and 137 trigger rules 103, in operation.

The session manager 102 ensures that the account resources are shared evenly across all of the active sessions for which the available resources are applicable. Sessions are managed on a per-subscriber, per-group (of subscribers), or per-service type basis. Furthermore, resources can be applicable for specified service types, for example, voice minutes can not be spent on SMS.

On receiving a resource request, the session controller object 135 uses the account manager object 137 to acquire the subscriber's account data containing the unreserved credit resource. If the credit is insufficient for the charging request the session controller object 135 retrieves a set of the current charging sessions for the specified subscriber from the local database.

Iterating the set of charging sessions for the specified subscriber, the session controller object 135 attempts to redistribute the available reservation token objects 140 in accordance with a pre-defined policy (held in the redistribution policy object 136) amongst the remaining charging sessions. This involves rating the service to attempt to allocate credit resource (as defined by the policy) to the session. If the session controller redistributes an existing charging session's reservation token objects 140, the charging clients must be notified. The mechanism for re-distributing resources involves modifying attributes of the reservation token objects 140.

Some charging sessions cannot be altered once they are started as they refer to a fixed cost, for example, paying for a video download or Java game.

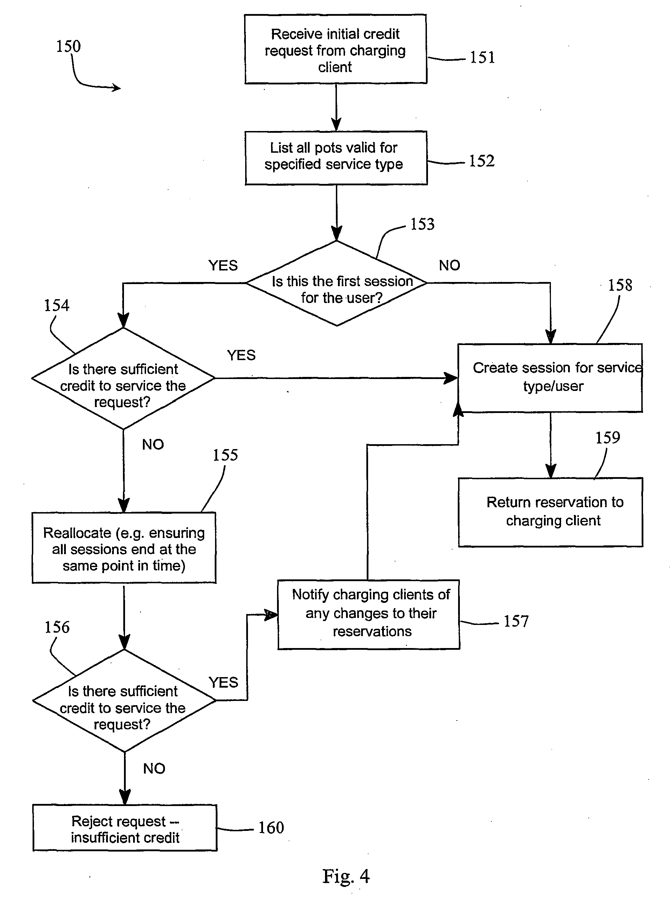

Fig. 4 illustrates a method 150 of steps 151 - 160 carried out to process a request to charge. On a new charging request (151), the session manager 102 and the rules 103 determine (152) all valid pots for the service type and determine (153) whether there are existing sessions for the specified user. If there are not any existing sessions, they rate and reserve accordingly (154) (either calculate the optimal quota allocation based on historical usage or simply use defaults for the service type). If there are existing sessions, they determine (158) which resources are applicable to the service type and which resources have enough credit to service the request. If there is insufficient remaining credit the manager 102 reallocates (155) the remaining account resources to the existing sessions and sends notifications to the service entities (which may result in notifications being sent to user devices according to service entity policy/capability and overall network infrastructure policy/capability). Some sessions will be fixed either because the charging client cannot alter reservations or because the reservations are fixed (as in the case of a game download). The manager 102 re-evaluates the existing reservations based on attributes such as the service type, service cost, current burn rate and ensures that all session end at the same point in time (for time-based sessions). In other embodiments the manager 102 does not schedule all sessions to end at the same point in time, but instead provides a different allocation according to the algorithm of the policy object 136.

Where the manager102 has altered the reservation and there is sufficient credit (156) it notifies (157) the client (service entity), which in turn notifies the user device according to its policy.

The control system 101 performs concurrent service charging, applying a set of charging rules at the time of, and during, each use of a service to determine where resources for that service come from and how those resources are consumed across multiple services, some of which may be executing concurrently. There is therefore concurrent real time monitoring where at least one account is for multiple services. There is dynamic re-allocation of resources from the account across multiple services being concurrently used. At least some accounts have a number of "pots", each pot being for a particular type of resource unit. The primary examples of resource units are time and bytes or packets.

The control system 101 implements charging rules 103 relating to two main types of activity. Firstly, which pots are available to each service when that service is engaged by a subscriber. Secondly, how the total available resource for all services (which may involve the sum of the funds in multiple pots) is distributed, retracted, recalculated and controlled amongst multiple services, some of which are executing simultaneously. Not all pots are available to all services. A resource is what pays for the service and could be a currency value or any other token that can be used to purchase a service, for example an amount of time, number of "lives" for a game, or number of Megabytes of content.

The resources typically include a traditional prepay amount which is accessed before a service is connected, or a post-pay amount which represents a credit arrangement setup between subscriber and operator (as in a normal post-pay system), or a special prepay account available to only some services, or a promotions amount consisting of free SMS messages or talk time, or an external payment instrument such as a link to a credit card system, again set up just for some services. Accounts may be connected together in a group structure to allow multiple subscribers to draw on the monetary resource of multiple pots in a group account.

Customer care systems interact with the control system 101 via the interfaces 105 to control and view customer records. Provisioning systems allow the creation/deletion and modification of subscriber details. The O.A. & M systems interact with the control system 101 via SNMP.

The system 101 produces CDRs (Call Detail Records) detailing what services have been used (for example voice calls, SMS, MMS, or GPRS session). There may also be EDRs (Event Detail Records) detailing important events that might occur on a subscriber's account (such as account expiry or recharge events).

This invention allows an operator to offer its subscribers a multitude of payment instruments in paying for services, not just prepay, but a mix of pre and post-pay and other types, for example payment against a credit card or loyalty card. The system 101 maintains an accurate, real-time balance of prepay funds, avoids "hot billing" fraud issues and removes the problem of invalid service denial where one service reserves more credit than it actually uses at the expense of a second concurrent service which is denied service as a result of the first service's over-allocation.

The control system 101 executes the concurrent service charging rules 103 across all services within a network, and all clients interact with the system to request resource allocation and to be informed of any changes. The resources (or "quota") made available to a particular session is re-calculated at each point a quota allocation is made, and that calculation is based on two things: overall service usage at that instant, and the various charging rules that are in place, An example of this is given in Fig. 1, which illustrates the role of the system 101 when processing a voice call, an SMS message, and a GPRS session simultaneously. The system 101 dynamically determines resource allocations according to all concurrent services happening at this time and charging rules. This may require existing service entities to be informed that their resource quota allocation has changed.

The term "overall service usage" means that a quota calculator function of the session manager 102 analyses the existing requirements of all services such as voice, SMS, event charges from application services, and GPRS charge requests when making its calculation. This allows the Intelligent Charger 101 to balance the charging requests from all services in a. way that is consistent with the redistribution policy 136, rather than on a FIFO basis.

The session manager (102) uses historical data for a given subscriber or service to calculate value of a reservation. For example, if a voice SCP always requests a reservation of 60 seconds but the system can see from historical data that the subscriber averages a 130 second call duration, then this can be used for the reservation, This should effectively optimize the reservation process as the SCP in this example only reserves once as opposed to three times. This capability can either be performed on a per-subscriber basis or a per-service basis.

Total available resource quota in a given instance is determined by the session manager 102 automatically examining a number of parameters, as follows.
a) Account structure within the persistent data manager 104.
   An account can exist within an account structure which in turn represents a group of subscribers, for example a family or a business. The group account is available to all members of that account structure unless explicitly excluded on a subscriber-by-subscriber basis. It is possible for a subscriber to draw on multiple accounts simultaneously. For example the subscriber may want to charge for their GPRS session from their own account but all voice calls are to come from a business, group account.
b) Pot structure, service type, and resources.
   An account can have one or many pots. Most pots are restricted in some way to a particular use. It is possible for a subscriber to draw on multiple pots within an account simultaneously. Each pot is related to one or many services, for example, a "minutes" pot for GPRS and voice which are time-based services, an SMS-only pot which could contain some promotional free SMS, or a bundle SMS allocation, a "sand box" pot for specific content services constraining chargeable units (money, number of messages, megabytes etc) for use by a particular service. Typically, not all pots can be used for all services, but some pots can be used across multiple services.
   Regarding pot resources, a pot may represent a prepaid monetary value, or represent a credit arrangement set up between the subscriber and the operator ("post-pay"), or a credit-limited post-pay (i.e. "online", a mix of the two), or represent a link to an external payment system such as a bank account or credit card account, or it may represent a non-monetary resource value such as minutes or number of messages.
   Each pot has one and only one resource unit associated with it. Examples of these units are: internal currency, time (seconds), volume (bytes), number of messages, and external currency (for promotions), bullets (for a game) and MP3 downloads (for a promotion). A consistency check between pot service type and units is performed.
   Each pot within an account has a unique priority which is used by the manager 102 to determine the order in which the pots are exhausted. This priority order might be different per service type (Voice/SMS/MMS etc) or based on some other criteria such as time of day, for example. Another example is that a loyalty pot may be used before the main prepay pot is used. It could also be possible for pots that have the same priority order to be used in order of which funds within the pots expire first.
c) Service priority.
   Each service has a unique prioritisation in relation to other services. In cases of contention between two services the service priority is used to determine which service is denied and which service obtains quota. For example, as total available funds approaches zero, active sessions with a low priority will be terminated first before services with a high priority.
   There may also be grouped services that allow quota to be allocated in such a way as to ensure that each session will run out of quota simultaneously.
   In other embodiments, priorities of session will be determined by a number of mechanisms implemented by the functions 102. Configuration will allow for sessions to be configured as to whether they are able to be "shrunk", for example downloads of a video for a specific size is not to be shrunk. Configuration can also state that voice calls or any other session should be "shrunk" last allowing any remaining minor balance to be allocated to a call that might be in progress. Priorities can also be determined from control signals that are presented at the time of the session request from the service supply entity. They will be able to state that they have an important session that must have an amount of time or amount of data that can not be interrupted. The manager will be able to control which service supply entities are able to make higher priority service requests and for which services they are able to do this.
   Referring again to Fig. 3, configurations are set by changing attributes of the session controller 135 and policy object 136. This is a particularly effective way of effecting configuration settings as they are propagated to all interested objects in the session manager 102.
d) Service best effort flag.
   For some services it is meaningful to allocate a quota for less than what was requested, for example voice. For other services it is not as they are atomic in nature, for example a software program download. If this parameter is set for the service, a best effort allocation will occur in the event of low funds.
e) Heuristic Rating.
   To improve performance, the system 101 keeps a running estimate of the most likely total resource use for each session. In this way, the system 101 attempts to allocate a typical use of resources to each session to minimise the number of requests for new resources from that session, while also maximizing the total available quota for other sessions. A consistency check between (d) and (e) is performed in the manager 102.
f) Concurrent scalar charging.
   A scalar charge is where the total resources required for a session are unknown at the start of the session, for example, a voice call or a GPRS session. On the other hand, for an event charge the total charge is known up-front, for example an SMS or a Java game download. In the case where two scalar charging sessions are competing for remaining quota, for example, making a voice call while continuing with a GPRS session, it is possible for some of the quota allocated to one session to be retracted and issued to the other session. This happens in the case where the burn rate of one session is greater than another, or where a new session joins a set of existing sessions (e.g. a high priority download comes in during a voice call or GPRS session). It avoids invalid service denial of the faster burning service. This aspect of the Intelligent Charger 101 guarantees that despite multiple scalar charging scenarios a subscriber may spend their entire available credit.
g) Each pot can be replenished in a number of ways.
   The pot may be simply recharged as with a typical prepay system, or it may be recharged by rules of the rules base 3 within the Intelligent Charger 101 which allocate credit according to a policy defined by the operator, for example, a real-time loyalty payment as a result of certain service usage. Each pot may be recharged in one or more ways. The recharge may occur mid-service, and because the Intelligent Charger 101 potentially performs multiple quota calculations and allocations per service use, the funds from the recharge may be available to ongoing activities such as calls. In a similar way, a balance enquiry at any time during service usage will give a much more accurate picture of the balance than in a traditional prepay system. Finally, a pot may also be activated or deactivated by the system 101 during an activity: for example the time band of a pot becomes no longer relevant or an expiry date of a pot of promotions is reached.

As noted above, unlike current prepay systems the management of the quota is not distributed to the client (the service control point) but is kept locally in the Intelligent Charger 101. This is the case for all sessions and all pot units except volume, which in some cases is managed locally by the client. All other timers (for time) and counters are kept within the manager 102. In some cases with volume quota, concurrent scalar charging is performed by requesting some quota back from the client in order to re-allocate it to other sessions. This capability is dependent on the co-operation of the client.

The system 101 allows a request of what the user has currently used during the current quota allocation to be made. The quota will then be able to be updated by knowing what is physically impossible to have been delivered in the time taken for the response to come back and for a new quota allocation to be sent out. If the user is not in a low credit scenario this will allow the system to "claw" back allocated quota from the network even if a voice call comes in. For example if GPRS is based on time and not volume then again it will be possible to "claw" back time from the data networks just as easily as voice.

Referring again to Fig. 1, this illustrates the responsibility and function of the Intelligent Charger 101. The following are the messages illustrated:
1. MSC sends initial request to set up a call to voice SCP.
2. Voice SCP Requests quota from Intelligent Charger ("IC") 101
3. IC 101 handles the request through session management.
4. Session manager in IC 101 requests from the rating and charging rules 103 available quota for voice calls that satisfies all the contextual parameters (time of day and so on).
5. The rating and charging rules 103 determine an allocation of quota. This is the point where for example the IC 101 will issue a resource quota reservation.
6. Session manager 102 sets up a timer and (7) and sends an event to initiate the call via the SCP.
7. See (6).
8. A response is sent to the MSC 119 to tell it to route the call.
9. As the call proceeds, a request for an event charge for an SMS is sent to IC.
10. That event is handled by session manager 102.
11. Session manager 102 requests a quota for that SMS.
12. The IC 101 applies its rating and charging rules 103 to assign a fixed quota for this session. The scenario presented here is a charge-refund model, but this could easily be a reserve-capture model.
13. No timer is set up for this service. The event is passed to the messaging system to process (14).
14. See (13).
15. While the call continues and while the session charge is being processed for the SMS, a GPRS PDP-Context is requested from the subscriber. The Data SCP 111 initiates an event to IC 101 to request quota to proceed. This could equally have been a GPRS PDP-Context for a different subscriber who is part of the same group as the original subscriber in 1 to 14 above and as part of that group both this subscriber and the previous one make use of a group account i.e. a "pot" of resource that may be used to pay for service for any member of the group.
16. Session manager 102 takes control of the event.
17. Session manager 102 requests from the rules 103 a quota for this PDP-Context.
18. The rules 103 are applied to set up a quota of seconds (time) for this GPRS PDP-Context, as that is the way this is configured for the operator. Almost all remaining quota for time-based sessions is used in setting up this PDP-context. The subscriber in IC is therefore now in a low credit scenario.
19. A quota of time is set up in the session manager 102 and (20) an event is sent to the GPRS system to tell the Data SCP to allow the session to be set up.
20. See (19).
21. At this point the time quota allocated to the voice session in (1)-(8) is coming close to exhaustion. An event is sent to the rating and charging rules 103 to replenish this timer.
22. The rating and charging rules 103 in this case determine that this is a low credit scenario and so IC 101 requests (remaining quota - 15s) from all sessions that are using pots that relate to voice.
23. The GPRS timer details are sent to the rating and charging rules 103. It continues with the buffer of 15s (which is configurable).
24. The sum of all remaining quota and all returned quota is divided up according to charging rules 103 between the competing sessions. For example, it is divided evenly. This quota is reallocated to the GPRS session (24) and (25) the voice session.
25. See (24).
26. The steps 2-25 are repeated until the returned quota is zero. That is, there is no available quota in any of the pots within the account. At this point the session sends a low-credit warning to the service to instruct the SCP to play an announcement (27) or to introduce an HTML page to warn the subscriber to recharge. Once this announcement is played, any requests to return remaining quota to the rating and charging components are rejected (i.e. zero is returned). This preserves a consistent subscriber experience.
27. See (26).

A message is required to be sent to the client(s) that have been affected by a new session being registered with the session manager. This can either be a new message defined as part of an existing interface i.e. a new message within Diameter or other charging related interface. Alternatively, it can be a new protocol defined to convey the message that the client no longer has access to the reservation of credit that it was given previously and it would be up to the client to support this new protocol. The new protocol or existing protocols will most likely be running over a transport protocol such as TCP/IP to allow networked communication between multiple clients and the session manager. This may be a low level socket-based communication and proprietary message definition or it could be a higher level Inter Process Communication mechanism, i.e. call back mechanism with CORBA, Remote Procedure Call, SOAP or HTTP requests.

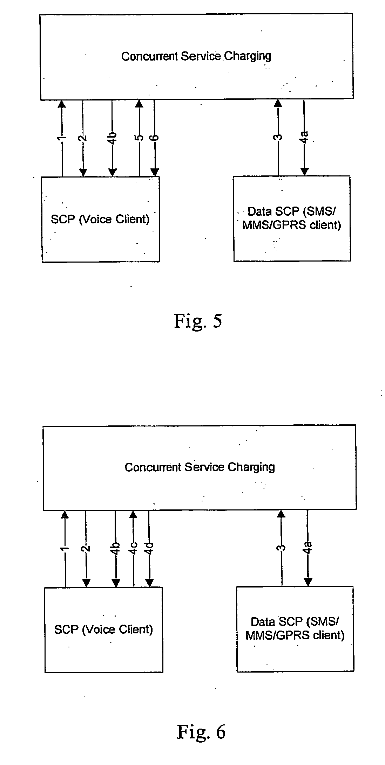

Fig. 5 shows how concurrent service charging introduces an interaction with the client to update the quota of credit/time that was first issued.
In this diagram the following occurs;
1. The client asks the system 101 for a reservation of credit
2. The system 101 either accepts or denies the reservation.
3. Another client asks the system 101 for a reservation of credit, at this point the session manager 102 decides what portion of the balance the first client and second client should have and informs both clients what this decision is. This can occur for time based services however for volume based services a request to one or more of the clients may be required to determine how much volume has been used up to this point of time.
4.
   4a. A response is returned to the second client
   4b. A message is sent to the first client to inform it that the reservation it had requested has changed.
5. The first client returns with another charging request at the time that is based on the changed reservation that was received in 4b.
6. A response is returned stating how much time is now allowed to occur.

It is advantageous that 4b is introduced as a message to the clients of the service and it is also advantageous that the control system has the ability to update all reservations that occur on a shared balance or single balance shared by multiple ongoing concurrent sessions.

Where a client is not able to accept a change in a reservation a new message is sent that informs the client that it must come back and ask for a new reservation.

Referring to Fig. 6, the main difference in this diagram is that 4b is a request for the client to ask for a new reservation and 4c and 4d are the flows for this request. However this differs from the prior art in that 4a and 4b can occur in parallel so the second client is not delayed until the first client performs its re-reservation request.

The invention is not limited to the embodiments described but may be varied in construction and detail. For example, it may be applied to other environments such as simultaneous supply of multiple power services. The services are concurrent communication sessions, however, they could alternatively be other types of concurrent service instances. Examples of non-communication services are parking payment, traffic congestion charging, power usage, and road toll charging. In the communication field, the invention may be applied to networks such as IMS networks, and the sessions may be of any other type such as SMS, MMS, rich-voice, or email. The database of the control system may comprise memory or permanent storage devices.

Also, the pot of usage may physically reside within the control system 101 or may be held on an external system such as an external billing system or financial system.

Also, in another embodiment, the quota that is allocated when the network entity first communicates with the control system may be based on historic information of what is typically seen on a specific site. A usage tracking algorithm performs this processing. For example, the average call duration of an operator can be determined and used when determining what the first allocation should be. This will reduce the chances of the credit pot being over-allocated when other services occur concurrently and reduce the chance of the original reservation having to be extended.

By having the rating for all services controlled by the system, an operator will be able to do cross-service rating and loyalty processing. For example, the price of voice calls could be affected by the number of SMS or MMS that a subscriber has sent.

Further, in another embodiment, the control system interfaces with a service supply entity such as a mobile network entity for resource allocation negotiation. This may be performed initially at commencement of sessions or dynamically in response to events. For example, the system may interact with SCPs and Data SCPs such as PSA (Pre-delivery Service Agent). Data SCPs typically control SMS, MMS and GPRS usage. In the future MSC Servers, Application Servers and other IMS network entities will communicate with IC. In other embodiments, the system may interface with any computing element that is controlling the delivery of a service, for example set top boxes for prepaid TV, or intelligent electricity meters that are able to communicate via TCP/IP or other network to determine if a subscriber has paid for their electricity.

## Claims

1. A real time service supply monitoring and control system comprising:
a data manager (104) comprising means for maintaining account resource data associating each of a plurality of resource accounts with one or more services, in which at least one account is associated with a plurality of services; and
a session manager (102) comprising:
functions for interfacing with a plurality of service supply entities;
functions for processing requests from said entities for resources to establish and maintain service supply sessions;
functions for monitoring concurrent sessions in real time;
a rule base (103) for, in real time, re-allocating resources from said accounts (104) to concurrent sessions according to service usage; and
functions to notify service supply entities of re-allocation of resources;
wherein the session manager (102) comprises means for generating a message for a service entity to either request additional resources for an account if it estimates that the resources will be exhausted during a current session or to inform the entity of a new quota of resources;
wherein the session manager (102) comprises means for interfacing with a service supply entity for resource allocation negotiation;
wherein the data manager (104) comprises means for maintaining at least one pot for each account, and wherein each pot is associated with a resource unit;
wherein the units include time, volume of bytes, number of messages, and number of program or content downloads;
wherein the session manager (102) comprises means for determining priorities for resource allocation, and for using the priorities to determine the order in which pots are to be exhausted according to the priority;
wherein the data manager (104) comprises means for associating a priority with each pot;
wherein the session manager (102) comprises means for denying a service request if it determines that there are insufficient resources to satisfy all sessions; and
wherein the data manager (104) comprises means for dynamically modifying accounts during sessions drawing resources from said accounts.

2. A system as claimed in claim 1, wherein the service supply entities are communication network entities and the service usage is in communication sessions; and wherein the data manager comprises means for maintaining accounts for scalar and event-based resources.

3. A system as claimed in claims 1 or 2, wherein the session manager (102) comprises means for maintaining a running estimate of total resources for concurrent sessions, and comprises means for allocating resources to each session to minimise number of requests for fresh resources.

4. A system as claimed in claim 3, wherein the session manager (102) comprises means for generating a resource requirement estimate upon commencement of a fresh session.

5. A system as claimed in any preceding claim, wherein the session manager (102) comprises means for using historical data to calculate an initial resource allocation for a session.

6. A system as claimed in claim 5, wherein the session manager comprises means for calculating, using historical data per subscriber, the initial resource allocation upon detection of subscriber identity.

7. A system as claimed in either of claims 5 or 6, wherein the session manager comprises means for calculating, using historical data per service, the initial resource allocation according to the service.

8. A system as claimed in any preceding claim, wherein at least one pot is associated by the session manager (102) with a plurality of service types.

9. A system as claimed in any preceding claim, wherein the session manager (102) comprises means for associating a resource account with a group of subscribers.

10. A system as claimed in any preceding claim, wherein the session manager (102) comprises means for re-allocating all concurrent sessions according to a policy which determines a target end time for the sessions.

11. A system as claimed in any preceding claim, wherein the session manager (102) comprises means for re-allocating all concurrent sessions according to a policy which determines target data volumes for sessions; and wherein the re-allocation is performed on the basis that all concurrent sessions end at approximately the same time.

12. A system as claimed in any preceding claim, wherein the session manager (102) comprises means for interfacing with service supply entities according to a reserve-capture scheme.

13. A system as claimed in any preceding claim, wherein the session manager (102) comprises means for flagging resources which are amenable to modification for re-allocation; and wherein the session manager (102) does not flag some software downloads as being amenable to modification as they are atomic in nature.

14. A system as claimed in any preceding claim, wherein the session manager (102) comprises means for interfacing with service entities in parallel.

15. A system as claimed in any preceding claim, wherein the session manager (102) comprises a session controller object (135) linked with a resource re-allocation policy object (136) having at least one re-allocation algorithm, method, and the session controller object (135) has methods for calling the re-allocation policy object (136) for making decisions for resource re-allocation.

16. A system as claimed in claim 15, wherein the session controller object (135) contains a plurality of session objects (139), each containing at least one reservation token object (140), and the session controller object (135) dynamically performs resource re-allocation by instructing a session object (139) to modify a contained reservation token object (140); and wherein the session object (139) modifies the reservation token object (140) by modifying an attribute of the reservation token object (140); and wherein the session manager (102) comprises an interface for modification of attributes of the session controller ((135) and policy (136) objects to implement configuration settings.

17. A computer readable medium comprising software code for performing operations of a real time service supply monitoring and control system, when executed in the processor of computer including the steps of:
maintaining account resource data associating each of a plurality of resource accounts with one or more services, in which at least one account is associated with a plurality of services; and
as a session manager (102):
interfacing with a plurality of service supply entities;
processing requests from said entities for resources to establish and maintain service supply sessions;
monitoring concurrent sessions in real time;
as a rule base, re-allocating resources from said accounts (104) to concurrent sessions according to service usage; and notifying service supply entities of re-allocation of resources;
as the session manager (102), generating a message for a service entity to either request additional resources for an account if it estimates that the resources will be exhausted during a current session or to inform the entity of a new quota of resources;
as the session manager (102), interfacing with a service supply entity for resource allocation negotiation;
as the data manager (104), maintaining at least one pot for each account, and wherein each pot is associated with a resource unit;
wherein the units include time, volume of bytes, number of messages, and number of program or content downloads;
as the session manager (102), determining priorities for resource allocation, and for using the priorities to determine the order in which pots are to be exhausted according to the priority;
as the data manager (104), associating a priority with each pot;
as the session manager (102), denying a service request if it determines that there are insufficient resources to satisfy all sessions; and
as the data manager (104), dynamically modifying accounts during sessions drawing resources from said accounts.

## Patentansprüche

1. System zum Überwachen und Steuern von Dienstelieferungen in Echtzeit, das Folgendes umfasst:
einen Datenmanager (104) mit Mitteln zum Führen von Kontoressourcendaten, die jedes von mehreren Ressourcenkonten mit einem oder mehreren Diensten assoziieren, wobei wenigstens ein Konto mit mehreren Diensten assoziiert ist; und
einen Sessionmanager (102), der Folgendes umfasst:
Funktionen zum Verbinden mit mehreren Dienstelieferungsentitäten;
Funktionen zum Verarbeiten von Anforderungen von den genannten Entitäten für Ressourcen zum Herstellen und Führen von Dienstelieferungssessions;
Funktionen zum Überwachen gleichzeitiger Sessions in Echtzeit;
eine Regelbasis (103), um in Echtzeit Ressourcen von den genannten Konten (104) gleichzeitigen Sessions je nach Dienstegebrauch neu zuzuordnen; und
Funktionen zum Benachrichtigen von Dienstelieferungsentitäten über die Neuzuordnung von Ressourcen;
wobei der Sessionmanager (102) Mittel zum Erzeugen einer Nachricht für eine Diensteentität entweder zum Anfordern zusätzlicher Ressourcen für ein Konto, wenn er schätzt, dass die Ressourcen während einer laufenden Session zur Neige gehen, oder zum Informieren der Entität über ein neues Ressourcenkontingent umfasst;
wobei der Sessionmanager (102) Mittel zum Verbinden mit einer Dienstelieferungsentität für eine Ressourcenzuordnungsverhandlung umfasst;
wobei der Datenmanager (104) Mittel zum Führen wenigstens eines Topfes für jedes Konto umfasst und wobei jeder Topf mit einer Ressourceneinheit assoziiert ist;
wobei die Einheiten Zeit, Bytevolumen, Anzahl Nachrichten und Anzahl Programm- oder Inhalts-Downloads beinhalten;
wobei der Sessionmanager (102) Mittel zum Ermitteln von Prioritäten für eine Ressourcenzuordnung und zum Verwenden der Prioritäten zum Ermitteln der Reihenfolge umfasst, in der Töpfe gemäß der Priorität auszuschöpfen sind;
wobei der Datenmanager (104) Mittel zum Assoziieren einer Priorität mit jedem Topf umfasst;
wobei der Sessionmanager (102) Mittel zum Ablehnen einer Diensteanforderung umfasst, wenn er feststellt, dass es nicht genügend Ressourcen gibt, um alle Sessions zu versorgen; und
wobei der Datenmanager (104) Mittel zum dynamischen Modifizieren von Konten bei Sessions umfasst, die Ressourcen aus den genannten Konten entnehmen.

2. System nach Anspruch 1, wobei die Dienstelieferungsentitäten Kommunikationsnetzentitäten sind und der Dienstegebrauch in Kommunikationssessions erfolgt; und wobei der Datenmanager Mittel zum Führen von Konten für skalare und eventgestützte Ressourcen umfasst.

3. System nach Anspruch 1 oder 2, wobei der Sessionmanager (102) Mittel zum Führen einer laufenden Schätzung von Gesamtressourcen für gleichzeitige Sessions und Mittel zum Zuordnen von Ressourcen zu jeder Session umfasst, um die Anzahl an Anforderungen für frische Ressourcen zu minimieren.

4. System nach Anspruch 3, wobei der Sessionmanager (102) Mittel zum Erzeugen einer Ressourcenbedarfsschätzung nach Beginn einer frischen Session umfasst.

5. System nach einem der vorherigen Ansprüche, wobei der Sessionmanager (102) Mittel zum Verwenden von Historiendaten zum Berechnen einer anfänglichen Ressourcenzuordnung für eine Session umfasst.

6. System nach Anspruch 5, wobei der Sessionmanager Mittel zum Berechnen, unter Verwendung von Historiendaten pro Abonnent, der anfänglichen Ressourcenzuordnung nach dem Erkennen einer Abonnentenidentität umfasst.

7. System nach Anspruch 5 oder 6, wobei der Sessionmanager Mittel zum Berechnen, unter Verwendung von Historiendaten pro Dienst, der anfänglichen Ressourcenzuordnung gemäß dem Dienst umfasst.

8. System nach einem der vorherigen Ansprüche, wobei wenigstens ein Topf vom Sessionmanager (102) mit mehreren Dienstetypen assoziiert ist.

9. System nach einem der vorherigen Ansprüche, wobei der Sessionmanager (102) Mittel zum Assoziieren eines Ressourcenkontos mit einer Gruppe von Abonnenten umfasst.

10. System nach einem der vorherigen Ansprüche, wobei der Sessionmanager (102) Mittel zum Neuzuordnen aller gleichzeitigen Sessions gemäß einer Richtlinie umfasst, die eine Zielendzeit für die Sessions ermittelt.

11. System nach einem der vorherigen Ansprüche, wobei der Sessionmanager (102) Mittel zum Neuzuordnen aller gleichzeitigen Sessions gemäß einer Richtlinie umfasst, die Zieldatenvolumen für Sessions ermittelt; und wobei die Neuzuordnung auf der Basis erfolgt, dass alle gleichzeitigen Sessions etwa zur selben Zeit enden.

12. System nach einem der vorherigen Ansprüche, wobei der Sessionmanager (102) Mittel zum Verbinden mit Dienstelieferungsentitäten gemäß einem Reserveerfassungsschema umfasst.

13. System nach einem der vorherigen Ansprüche, wobei der Sessionmanager (102) Mittel zum Markieren von Ressourcen umfasst, die für eine Modifikation zur Neuzuordnung offen sind; und wobei der Sessionmanager (102) einige Software-Downloads nicht als für eine Modifikation offen markiert, wenn diese von atomischer Natur sind.

14. System nach einem der vorherigen Ansprüche, wobei der Sessionmanager (102) Mittel zum gleichzeitigen Verbinden mit Diensteentitäten umfasst.

15. System nach einem der vorherigen Ansprüche, wobei der Sessionmanager (102) ein Session-Controller-Objekt (135) umfasst, das mit einem Ressourcenneuzuordnungs-Richtlinienobjekt (136) mit wenigstens einem Neuzuordnungsalgorithmus verknüpft ist, Verfahren [*sic*], und das Session-Controller-Objekt (135) Verfahren zum Rufen des Neuzuordnungsrichtlinienobjekts (136) zum Treffen von Entscheidungen für eine Ressourcenneuzuordnung hat.

16. System nach Anspruch 15, wobei das Session-Controller-Objekt (135) mehrere Sessionobjekte (139) enthält, die jeweils wenigstens ein Reservierungs-Token-Objekt (140) enthalten, und das Session-Controller-Objekt (135) dynamisch eine Ressourcenneuzuordnung durch Anweisen eines Sessionobjekts (139) durchführt, ein enthaltenes Reservierungs-Token-Objekt (140) zu modifizieren; und wobei das Sessionobjekt (139) das Reservierungs-Token-Objekt (140) durch Modifizieren eines Attributs des Reservierungs-Token-Objekts (140) modifiziert; und wobei der Sessionmanager (102) eine Schnittstelle zum Modifizieren von Attributen des Session-Controller-Objekts (135) und des Richtlinienobjekts (136) zum Implementieren von Konfigurationseinstellungen umfasst.

17. Rechnerlesbares Medium, das Softwarecode zum Ausführen von Operationen eines Systems zum Überwachung und Steuern von Dienstelieferungen in Echtzeit umfasst, das bei Ablauf im Prozessor eines Computers die folgenden Schritte beinhaltet:
Führen von Kontoressourcendaten, die jedes von mehreren Ressourcenkonten mit einem oder mehreren Diensten assoziieren, wobei wenigstens ein Konto mit mehreren Diensten assoziiert ist; und
als Sessionmanager (102):
Verbinden mit mehreren Dienstelieferungsentitäten;
Verarbeiten von Anforderungen von den genannten Entitäten für Ressourcen zum Herstellen und Führen von Dienstelieferungssessions;
Überwachung gleichzeitiger Sessions in Echtzeit;
als Regelbasis, Neuzuordnen von Ressourcen von den genannten Konten (104) zu gleichzeitigen Sessions je nach Dienstegebrauch; und Benachrichtigen von Dienstelieferungsentitäten über eine Neuzuordnung von Ressourcen;
als Sessionmanager (102), Erzeugen einer Nachricht für eine Diensteentität entweder zum Anfordern zusätzlicher Ressourcen für ein Konto, wenn er schätzt, dass die Ressourcen während einer laufenden Session zur Neige gehen, oder zum Informieren der Entität über ein neues Ressourcenkontingent;
als Sessionmanager (102), Verbinden mit einer Dienstelieferungsentität für eine Ressourcenzuordnungsverhandlung;
als Datenmanager (104), Führen wenigstens eines Topfs für jedes Konto, und wobei jeder Topf mit einer Ressourceneinheit assoziiert ist;
wobei die Einheiten Zeit, Bytevolumen, Anzahl Nachrichten und Anzahl Programm- oder Inhalt-Downloads enthalten;
als Sessionmanager (102), Ermitteln von Prioritäten für eine Ressourcenzuordnung und zum Verwenden der Prioritäten zum Ermitteln der Reihenfolge, in der Töpfe gemäß der Priorität auszuschöpfen sind;
als Datenmanager (104), Zuordnen einer Priorität mit jedem Topf;
als Sessionmanager (102), Ablehnen einer Diensteanforderung, wenn er feststellt, dass es nicht genügend Ressourcen gibt, um alle Sessions zu versorgen; und
als Datenmanager (104), dynamisches Modifizieren von Konten bei Sessions, die Ressourcen aus den genannten Konten entnehmen.

## Revendications

1. Un système de commande et de surveillance de fourniture de services en temps réel comprenant :
un gestionnaire de données (104) comprenant un moyen d'entretenir des données de ressources de comptes associant chaque compte d'une pluralité de comptes de ressources à un ou plusieurs services, dans lequel au moins un compte est associé à une pluralité de services, et
un gestionnaire de sessions (102) comprenant :
des fonctions d'interfaçage avec une pluralité d'entités de fourniture de services,
des fonctions de traitement de demandes provenant desdites entités pour des ressources destinées à établir et entretenir des sessions de fourniture de services,
des fonctions de surveillance de sessions simultanées en temps réel, une base de règles (103) destinée à, en temps réel, la réattribution de ressources provenant desdits comptes (104) à des sessions simultanées en fonction de l'utilisation des services, et
des fonctions de notification aux entités de fourniture de services de la réattribution de ressources,
où le gestionnaire de sessions (102) comprend un moyen de générer un message pour une entité de service pour soit demander des ressources additionnelles pour un compte s'il estime que les ressources seront épuisées au cours d'une session actuelle ou informer l'entité d'un nouveau quota de ressources,
où le gestionnaire de sessions (102) comprend un moyen d'interfaçage avec une entité de fourniture de services pour une négociation d'attribution de ressources,
où le gestionnaire de données (104) comprend un moyen d'entretenir au moins une ligne pour chaque compte, et où chaque ligne est associée à une unité de ressource,
où les unités comprennent temps, volume d'octets, nombre de messages et nombre de programmes ou de téléchargements de contenus,
où le gestionnaire de sessions (102) comprend un moyen de déterminer des priorités pour une attribution de ressources et pour utiliser les priorités pour déterminer l'ordre dans lequel les lignes doivent être épuisées selon la priorité,
où le gestionnaire de données (104) comprend un moyen d'associer une priorité à chaque ligne,
où le gestionnaire de sessions (102) comprend un moyen de refuser une demande de services s'il détermine que les ressources sont insuffisantes pour satisfaire toutes les sessions, et
où le gestionnaire de données (104) comprend un moyen de modifier dynamiquement des comptes au cours de sessions extrayant des ressources desdits comptes.

2. Un système selon la Revendication 1, où les entités de fourniture de services sont des entités de réseau de communication et l'utilisation de services est dans des sessions de communication, et où le gestionnaire de données comprend un moyen d'entretenir des comptes pour des ressources scalaires et basées sur des événements.

3. Un système selon la Revendication 1 ou 2, où le gestionnaire de sessions (102) comprend un moyen d'entretenir une estimation en cours des ressources totales pour des sessions simultanées et comprend un moyen d'attribuer des ressources à chaque session de façon à minimiser le nombre de demandes pour des ressources nouvelles.

4. Un système selon la Revendication 3, où le gestionnaire de sessions (102) comprend un moyen de générer une estimation de besoins en ressources dès le début d'une nouvelle session.

5. Un système selon l'une quelconque des Revendications précédentes, où le gestionnaire de sessions (102) comprend un moyen d'utiliser des données d'historique pour calculer une attribution de ressources initiale pour une session.

6. Un système selon la Revendication 5, où le gestionnaire de sessions comprend un moyen de calculer, au moyen de données d'historique par abonné, l'attribution de ressources initiale lors de la détection de l'identité de l'abonné.

7. Un système selon la Revendication 5 ou 6, où le gestionnaire de sessions comprend un moyen de calculer, au moyen de données d'historique par service, l'attribution de ressources initiale en fonction du service.

8. Un système selon l'une quelconque des Revendications précédentes, où au moins une ligne est associée par le gestionnaire de sessions (102) à une pluralité de types de services.

9. Un système selon l'une quelconque des Revendications précédentes, où le gestionnaire de sessions (102) comprend un moyen d'associer un compte de ressources à un groupe d'abonnés.

10. Un système selon l'une quelconque des Revendications précédentes, où le gestionnaire de sessions (102) comprend un moyen de réattribuer toutes les sessions simultanées en fonction d'une politique qui détermine une heure de fin cible pour les sessions.

11. Un système selon l'une quelconque des Revendications précédentes, où le gestionnaire de sessions (102) comprend un moyen de réattribuer toutes les sessions simultanées en fonction d'une politique qui détermine des volumes de données cibles pour les sessions et, où la réattribution est exécutée sur la base que toutes les sessions simultanées se terminent à approximativement la même heure.

12. Un système selon l'une quelconque des Revendications précédentes, où le gestionnaire de sessions (102) comprend un moyen d'interfaçage avec des entités de fourniture de services selon un schéma réservation-capture.

13. Un système selon l'une quelconque des Revendications précédentes, où le gestionnaire de sessions (102) comprend un moyen de marquer des ressources qui sont susceptibles de modification pour une réattribution et, où le gestionnaire de sessions (102) ne marque pas certains téléchargements de logiciels comme étant susceptibles de modification car ils sont atomiques par nature.

14. Un système selon l'une quelconque des Revendications précédentes, où le gestionnaire de sessions (102) comprend un moyen d'interfaçage avec des entités de service en parallèle.

15. Un système selon l'une quelconque des Revendications précédentes, où le gestionnaire de sessions (102) comprend un objet système de commande de sessions (135) relié à un objet politique de réattribution de ressources (136) possédant au moins un algorithme de réattribution, procédé [*sic*], l'objet système de commande de sessions (135) possède des procédés d'appel de l'objet politique de réattribution (136) afin de prendre des décisions pour la réattribution de ressources.

16. Un système selon la Revendication 15, où l'objet système de commande de sessions (135) contient une pluralité d'objets de session (139), chacun d'eux contenant au moins un objet jeton de réservation (140) et l'objet système de commande de sessions (135) exécute dynamiquement une réattribution de ressources en donnant l'ordre à un objet de session (139) de modifier un objet jeton de réservation contenu (140), et où l'objet de session (139) modifie l'objet jeton de réservation (140) en modifiant un attribut de l'objet jeton de réservation (140), et où le gestionnaire de sessions (102) comprend une interface de modification d'attributs des objets système de commande de sessions (135) et politique (136) de façon à mettre en oeuvre des paramètres de configuration.

17. Un support lisible par ordinateur contenant du code logiciel destiné à exécuter des opérations d'un système de commande et de surveillance de fourniture de services en temps réel lorsqu'il est exécuté sur le processeur d'un ordinateur, comprenant les opérations suivantes :
l'entretien de données de ressources de comptes associant chaque compte d'une pluralité de comptes de ressources à un ou plusieurs services, dans lequel au moins un compte est associé à une pluralité de services, et en tant que gestionnaire de sessions (102) :
l'interfaçage avec une pluralité d'entités de fourniture de services,
le traitement de demandes provenant desdites entités pour des ressources destinées à établir et entretenir des sessions de fourniture de services,
la surveillance de sessions simultanées en temps réel,
en tant que base de règles, la réattribution de ressources provenant desdits comptes (104) à des sessions simultanées en fonction de l'utilisation des services, et la notification aux entités de fourniture de services de la réattribution de ressources.
en tant que gestionnaire de sessions (102), la génération d'un message pour une entité de service pour soit demander des ressources additionnelles pour un compte s'il estime que les ressources seront épuisées au cours d'une session actuelle ou informer l'entité d'un nouveau quota de ressources,
en tant que gestionnaire de sessions (102), l'interfaçage avec une entité de fourniture de services pour une négociation d'attribution de ressources,
en tant que gestionnaire de données (104), l'entretien d'au moins une ligne pour chaque compte, et où chaque ligne est associée à une unité de ressource,
où les unités comprennent temps, volume d'octets, nombre de messages et nombre de programmes ou de téléchargements de contenus,
en tant que gestionnaire de sessions (102), la détermination de priorités pour une attribution de ressources et pour utiliser les priorités pour déterminer l'ordre dans lequel les lignes doivent être épuisées selon la priorité,
en tant que gestionnaire de données (104), l'association d'une priorité à chaque ligne,
en tant que gestionnaire de sessions (102), le refus d'une demande de services s'il détermine que les ressources sont insuffisantes pour satisfaire toutes les sessions, et
en tant que gestionnaire de données (104), la modification dynamique des comptes au cours de sessions extrayant des ressources desdits comptes.
